# FASCICULE DE BREVET EUROPEEN

(11) **EP 2 611 527 B1**
(45) Date de publication et mention de la délivrance du brevet: **17.04.2019**
(21) Numéro de dépôt: 11754361.1
(22) Date de dépôt: 02.09.2011
(51) Int. Cl.: B01D 69/14

(54) **UTILISATION D'UNE CHARGE MINÉRALE FONCTIONNALISÉE POUR STABILISER CHIMIQUEMENT UN POLYMÈRE, MEMBRANE AINSI STABILISÉE, SON PROCÉDÉ DE PRÉPARATION ET SES UTILISATIONS**
VERWENDUNG EINES FUNKTIONALISIERTEN MINERALS ZUR CHEMISCHEN STABILISIERUNG EINES POLYMERS, EINE DERART STABILISIERTE MEMBRAN, VERFAHREN ZU DEREN HERSTELLLUNG SOWIE DEREN VERWENDUNGEN
USE OF AN AMOUNT OF A FUNCTIONALIZED MINERAL FOR CHEMICALLY STABILISING A POLYMER, A MEMBRANE THEREBY STABILISED, A PROCESS FOR THE PRODUCTION THEREOF AND ITS USES

(30) Priorité: 03.09.2010 FR 1057030
(43) Date de publication de la demande: 10.07.2013
(73) Titulaire: Commissariat à l'Énergie Atomique et aux Énergies Alternatives, 75015 Paris (FR); Centre National de la Recherche Scientifique, 75794 Paris Cedex 16 (FR); Université Joseph Fourier, 38041 Grenoble Cedex 9 (FR)
(72) Inventeur: GONON, Laurent, F-69510 Soucieu-en-Jarrest (FR); MAREAU, Vincent, F-38320 Eybens (FR); MARESTIN, Catherine, F-69230 Saint-Genis-Laval (FR); MERCIER, Régis, F-69540 Irigny (FR); MONIN, Guillaume, F-38000 Grenoble (FR)
(74) Mandataire: Ilgart, Jean-Christophe
(86) Numéro de dépôt international: PCT/EP2011/065239
(87) Numéro de publication internationale: WO 2012/028736

(56) Documents cités:
- EP-A2- 0 074 708
- WO-A1-2010/011368
- JP-A- 2006 310 253
- US-A- 4 889 885
- US-A1- 2004 062 970
- US-A1- 2005 053 818
- US-A1- 2005 053 818
- US-A1- 2006 083 962
- US-A1- 2006 083 962
- US-A1- 2010 104 918

## Description

### DOMAINE TECHNIQUE

La présente invention appartient au domaine des matrices polymères, notamment au domaine des systèmes membranaires et, pour certaines applications, au domaine des énergies renouvelables et notamment au domaine des piles à combustible et, plus particulièrement, des piles à combustible comprenant, en tant qu'électrolyte, une membrane conductrice de protons, telle que les piles à combustible PEMFC (« Proton Exchange Membrane Fuel Cell » pour « Pile à combustible à membrane échangeuse de protons »).

Plus particulièrement, la présente invention, comme définie dans les revendications indépendantes, propose des stabilisants aptes à améliorer la durabilité des membranes polymères et notamment des membranes polymères sensibles à l'oxydation thermique, photochimique et chimique. De telles membranes polymères peuvent notamment être utilisées comme conducteur ionique.

Ainsi, la présente invention, comme définie dans les revendications indépendantes, propose, d'une part, un procédé pour stabiliser chimiquement une matrice polymère et, d'autre part, des membranes telles que des membranes conductrices (ou échangeuses) de protons présentant une stabilité chimique améliorée ainsi élaborées et des dispositifs de pile à combustible ou d'électrolyseurs comprenant de telles membranes.

### ÉTAT DE LA TECHNIQUE ANTÉRIEURE

Les piles à combustible à membrane échangeuse de protons ou PEMFC (pour l'anglais « Proton Exchange Membrane Fuel Cell ») sont des générateurs de courant dont le principe de fonctionnement repose sur la conversion de l'énergie chimique en énergie électrique par réaction catalytique de l'hydrogène et de l'oxygène.

Une pile à combustible comporte, classiquement, un empilement de cellules élémentaires, au sein desquelles a lieu une réaction électrochimique entre deux réactifs qui sont introduits de manière continue. Le combustible, tel que l'hydrogène pour les piles fonctionnant avec des mélanges hydrogène/oxygène (PEMFC), est amené au contact de l'anode, alors que le comburant, généralement l'oxygène, est amené au contact de la cathode. L'anode et la cathode sont séparées par un électrolyte, de type membrane échangeuse d'ions. La réaction électrochimique, dont l'énergie est convertie en énergie électrique, se scinde en deux demi-réactions :
- une oxydation du combustible, se déroulant à l'interface anode/électrolyte produisant des protons H⁺, qui vont traverser l'électrolyte en direction de la cathode, et des électrons e⁻, qui rejoignent le circuit extérieur, afin de concourir à la production d'énergie électrique ;
- une réduction du comburant, se déroulant à l'interface électrolyte/cathode et impliquant les protons ayant traversé la membrane, avec production d'eau et de chaleur.

La réaction électrochimique a lieu au niveau d'un assemblage électrode-membrane-électrode ou assemblage membrane-électrodes (AME), communément appelé « coeur de pile ».

Cet assemblage très mince d'une épaisseur de l'ordre du millimètre, voire beaucoup plus faible, est composé d'une membrane polymère et de couches catalytiques présentes d'un côté et de l'autre de la membrane. La membrane permet donc de séparer les compartiments anodique et cathodique. Les couches catalytiques sont généralement constituées de nanoparticules de platine supportées sur des agrégats de carbone. Des couches de diffusion gazeuse telles que tissu de carbone, feutre... sont disposées de part et d'autre de l'AME pour assurer la conduction électrique, l'arrivée homogène des gaz réactifs et l'évacuation de l'eau produite. De plus, chaque électrode est alimentée par les gaz combustible et comburant, par exemple, à l'aide d'une plaque cannelée dite « plaque bipolaire ».

L'épaisseur de la membrane est comprise en général entre 2 et 300 µm et notamment entre 3 et 200 µm, et résulte d'un compromis entre la tenue mécanique et la chute ohmique. Le polymère qui constitue cette membrane doit donc pouvoir donner des films minces, de 10 et 150 µm et notamment inférieurs à 50 µm, denses, sans défaut. De plus, cette membrane permet la séparation des gaz. La résistance chimique et électrochimique de ces membranes permet, en général, un fonctionnement en pile sur des durées supérieures à 1 000 heures.

La membrane doit donc remplir un certain nombre de conditions relatives à ses propriétés mécaniques, physico-chimiques et électriques qui sont, entre autres, celles définies ci-après. Les propriétés mécaniques, module élastique, contrainte à la rupture, ductilité, doivent la rendre compatible avec les opérations d'assemblage comprenant, par exemple, un serrage entre des cadres métalliques.

Les propriétés doivent être préservées en passant de l'état sec à l'état humide.

La membrane doit avoir une bonne stabilité thermique à l'hydrolyse et présenter une bonne résistance à la réduction et à l'oxydation. Cette stabilité thermomécanique s'apprécie en terme de variation de résistance ionique, et en terme de variation des propriétés mécaniques.

La membrane doit enfin posséder une forte conductivité ionique, cette conductivité étant apportée par des groupements acides, tels que des groupements acide carboxylique, acide phosphonique ou acide sulfonique reliés à la chaîne du polymère qui constitue la membrane de type membrane échangeuse de protons.

A l'heure actuelle, différentes stratégies ont été proposées pour améliorer la durabilité des membranes en terme de stabilité chimique et/ou thermique, sans affecter les autres propriétés de ces dernières. Cette stabilité chimique consiste, plus particulièrement, en une stabilité à l'oxydation. En effet, les radicaux HO˙ et HOO˙ et le peroxyde d'hydrogène sont souvent considérés comme responsables de la dégradation des membranes échangeuses de protons.

WO 2010/011368 A1 et US 2010/104918 A1 décrivent une matrice polymère comprenant des nanoparticules pour l'utilisation dans un dispositif électronique. Les particules minéraux sont fonctionnalisées pour améliorer les propriétés de la matrice polymère.

Certaines stratégies portent sur le polymère constituant la membrane, alors que d'autres consistent à disperser, dans les membranes, des catalyseurs piégeant le peroxyde d'hydrogène/les radicaux libres, tels que des catalyseurs à base d'oxydes de manganèse ou des stabilisants à l'oxydation.

Ainsi, Zhao et al., 2010 ont proposé, pour augmenter la durabilité de membranes de Nafion®, d'utiliser des nanocomposites de MnO₂/SiO₂ fonctionnalisés par un groupe portant un groupement acide sulfonique (-SO₃H), dont le précurseur est la 1,4-butanesultone **[1].** En variante, Rhee et al., 2006 ont utilisé des groupements -SO₃H greffés sur des nanofeuillets de titanate en utilisant comme précurseur des groupements -SO₃H soit des groupements thiols (-SH) qui sont ensuite oxydés en groupements -SO₃H, soit du 1,4-butanesultone ou du 1,3-propanesultone **[2].**

Les stabilisants à l'oxydation les plus utilisés sont des amines, désignées HAS (pour l'anglais « Hindered Amine Stabilizers ») et des phénols encombrés. A cet effet, Gensler et al., 2000 ont étudié l'influence d'antioxydants phénoliques et de deux HAS commercialisés par Ciba Specialty Chemicals Inc. (Figure 2) sur la dégradation thermo-oxydative du polypropylène isotactique **[3].**

Il convient toutefois de remarquer que Mikhailenko et al., 2009 ont modifié des membranes en polyétheréthercétone sulfoné (sPEEK) avec un piégeur de radicaux libres polyphénolique qu'est la catéchine **[4].** De façon surprenante, il a été montré que les membranes ainsi modifiées présentaient une plus faible stabilité chimique, une conductivité diminuée et une détérioration de leurs performances. Plus particulièrement, Mikhailenko et al., 2009 ont montré que des stabilisants classiques type phénols encombrés ne sont pas efficaces suite à une réaction de condensation entre phénols et acides sulfoniques. Outre l'absence de stabilisation, cette réaction de condensation se traduit par la disparition de fonctions ioniques et donc une baisse de la conductivité de la membrane. Par l'enseignement de Mikhailenko et al., 2009, l'homme du métier apprend que tout stabilisant classique n'est pas forcément utilisable pour stabiliser chimiquement une membrane échangeuse de protons dans une application de pile à combustible.

L'activité antioxydante des aminothiazoles a déjà été étudiée. En effet, De et al. 2008 ont travaillé sur un analogue de la dendrodoïne, alcaloïde extrait de tunicier marin *Dendrodoa grossularia* **[5].** Cet analogue correspondant au 4-amino-5-benzoyl-2-(4-methoxy phénylamino) thiazole a montré une activité antioxydante concentration-dépendante.

Dans le domaine des membranes échangeuses de protons, Sen et al., 2008 ont mis en oeuvre des membranes à base de Nafion® soit gonflées d'une solution contenant des azoles tels que du 1H-1,2,4-triazole, 3-amino-1,2,4-triazole ou du 5-aminotétrazole, soit coulées à partir d'une solution contenant du Nafion® et de tels azoles **[6].** Les propriétés des membranes ainsi obtenues, en terme de stabilité thermique, de perméabilité au méthanol et de conductivité ont été étudiées. Sen et al., 2008 semblent avoir observé une meilleure stabilité chimique mais cette dernière n'a pas été démontrée.

De plus, le dioxyde de cérium (CeO₂) est connu pour présenter une réaction rédox réversible plus rapide (Ce³⁺ -> Ce⁴⁺ + e⁻). Ainsi, Xiao et al. 2010 ont utilisé des nanoparticules de CeO₂ pour préparer des membranes composites composées de Nafion®212 combiné avec une couche de Nafion® pulvérisée et dans laquelle des nanoparticules de CeO₂ sont uniformément dispersées **[7].** La dégradation chimique de ces membranes a été étudiée.

Il apparaît donc clairement que différentes stratégies ont été envisagées ou proposées pour augmenter la stabilité chimique et donc la durabilité des membranes échangeuses de protons. De façon surprenante, les résultats obtenus ont montré que tout stabilisant n'est pas forcément utilisable à cet effet.

Les inventeurs se sont donc fixés pour but de mettre au point des stabilisants de membranes échangeuses de protons permettant non seulement d'améliorer la stabilité chimique et donc la durabilité de ces membranes mais également d'améliorer au mieux l'ensemble des propriétés des membranes et ainsi élargir leurs champs d'application.

### EXPOSÉ DE L'INVENTION

Pour arriver au but fixé, les inventeurs ont, tout d'abord, étudié le composé modèle représentatif de l'unité de répétition du sPEEK. Ce composé, ci-après désigné composé M1, répond à la formule suivante :

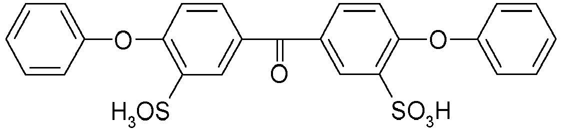

L'étude de ce composé M1 a montré que la dégradation du sPEEK résulte de l'addition de radicaux hydroxyles sur les noyaux aromatiques situés de part et d'autre des liaisons éther suite à l'effet mésomère donneur de l'atome d'oxygène.

Il a donc été envisagé que le remplacement des atomes d'oxygène par des atomes de soufre devrait conduire à une structure macromoléculaire moins sensible à l'oxydation. Le composé ainsi obtenu et ci-après désigné M2 répond à la formule :

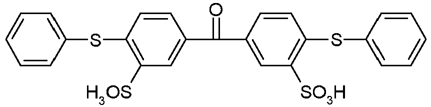

En effet, si le soufre a également un effet mésomère donneur, il est très sensible à l'oxydation. Or les inventeurs pensaient que son oxydation allait conduire à la formation de SO puis de SO₂ et ainsi créer une structure ayant un effet mésomère accepteur réduisant fortement les réactions d'addition sur les noyaux aromatiques. Malheureusement, les inventeurs ont montré que si l'oxydation de S en SO a bien lieu, la réaction d'oxydation suivante ne conduit pas à SO₂ mais à une coupure de chaîne. Enfin, les inventeurs ont montré que l'oxydation d'un mélange M1 + M2 se fait préférentiellement sur le composé M2.

Les inventeurs ont donc envisagé d'utiliser cet enseignement pour préparer des molécules sacrificielles jouant le rôle de stabilisants pour des membranes échangeuses de protons. Il convient de rappeler que, pour jouer un tel rôle, ces molécules doivent respecter plusieurs conditions qui sont :
- être plus facilement oxydables que la matrice polymère elle-même : ce point est directement lié aux travaux présentés ci-dessus et a été vérifié à l'aide de composés modèles ;
- ne pas être éluées par l'eau générée en continu dans la pile : ces molécules sont donc greffées sur un support ;
- se trouver dans les zones où la matrice polymère est la plus sensible à la dégradation. En effet, ces membranes sont hétérogènes présentant des zones hydrophobe et hydrophile. Or, comme il est suspecté une plus forte sensibilité de la matrice polymère au niveau de sa zone hydrophile, ces molécules sacrificielles peuvent se trouver réparties dans l'ensemble de la matrice polymère ou concentrées au niveau de la zone hydrophile de cette dernière. Avantageusement, ces molécules sacrificielles doivent se trouver concentrées au niveau de ladite zone hydrophile.

Les travaux des inventeurs et les résultats obtenus s'appliquent non seulement aux membranes échangeuses de protons mais aussi à toute membrane échangeuse d'ions et, de façon plus générale encore, à toute membrane à matrice polymère et à toute matrice polymère susceptible d'être soumise à une réaction oxydante. Par « membrane échangeuse d'ions », on entend aussi bien une membrane anionique qu'une membrane cationique telle qu'une membrane échangeuse de protons.

Tout d'abord, la présente invention, comme définie dans les revendications indépendantes, concerne l'utilisation d'au moins une charge minérale fonctionnalisée par au moins un groupement comprenant au moins un atome de soufre pour stabiliser chimiquement une matrice polymère et/ou pour augmenter sa durabilité.

Avantageusement, ladite matrice polymère est comprise dans une membrane, telle qu'une membrane échangeuse d'ions et notamment une membrane cationique ou une membrane anionique.

Par « stabiliser chimiquement », on entend, dans le cadre de la présente invention, rendre une matrice polymère et notamment une membrane, telle qu'une membrane échangeuse d'ions moins sensible à l'oxydation en présence de la charge minérale fonctionnalisée, qu'en l'absence de cette dernière. L'amélioration de la stabilité chimique d'une membrane, telle qu'une membrane échangeuse d'ions peut s'apprécier en comparant l'oxydation du composé modèle représentatif de l'unité de répétition de la matrice polymère notamment de la membrane avec celle du groupement fonctionnalisant. Cette comparaison peut consister à soumettre un mélange comprenant ce composé modèle représentatif et le groupement fonctionnalisant à des conditions oxydantes puis à comparer l'oxydation du composé modèle représentatif avec celle du groupement fonctionnalisant ou à comparer l'oxydation du composé modèle représentatif en présence ou en absence du groupement fonctionnalisant.

A titre d'exemple de protocole utilisable en ce qui concerne les conditions oxydantes, on utilise une 1^{ère} solution contenant le composé modèle représentatif et une 2^{nde} solution contenant le composé modèle représentatif (CMR) et le groupement fonctionnalisant (GF) dans un rapport molaire GR/CMR = 0,1. Du peroxyde d'hydrogène (H₂O₂) en solution est ajouté, de façon successive, aux solutions dans le rapport molaire suivant H₂O₂/GF = 0,5. La température des solutions est maintenue à 130°C et le temps entre deux ajouts de H₂O₂ est d'environ 8 h (8 h ± 1 h) pour permettre une décomposition induite par le H₂O₂ complète entre deux étapes successives de dégradation.

En ce qui concerne l'oxydation du composé modèle représentatif, une analyse par HPLC est réalisée sur un Agilent 1100 Series (Passeur d'échantillons G1313A, Pompe quaternaire G1311A et Détecteur UV G1315B). Les conditions expérimentales suivantes sont utilisées : colonne, phase inverse 300 SB-C18 (4.6-250 mm, 5 mm) ; composition de la phase mobile, eau avec acétate d'ammonium à 5 mM (solvant A) et acétonitrile (solvant B) ; débit de la phase mobile, 1 ml/min ; gradient de solvant linéaire, 0-75 min 95-75% (solvant A). Les spectres de masse sont obtenus en utilisant un spectromètre de masse LC/MSD SL (G1956B) équipé avec une source électrospray utilisée pour ioniser les molécules. Les données sont analysées en utilisant le logiciel Agilent Chemstation (version B.01.01). La séparation de phase est contrôlée par absorption UV à 295 et 254 nm et détection du spectre de masse. Les longueurs d'ondes précitées sont caractéristiques pour tous les produits oxydés ou non et permettent de quantifier efficacement la dégradation du composé modèle représentatif.

L'augmentation de la durabilité de la matrice polymère et notamment d'une membrane, telle qu'une membrane échangeuse d'ions s'apprécie en comparant la durabilité de la matrice polymère et notamment de la membrane, telle qu'une membrane échangeuse d'ions comprenant une charge minérale fonctionnalisée selon la présente invention avec celle de la même membrane sans charge minérale fonctionnalisée.

Par conséquent et en d'autres termes, la présente invention concerne un procédé pour stabiliser chimiquement une matrice polymère ou une membrane, telle qu'une membrane échangeuse d'ions et/ou pour augmenter sa durabilité consistant à disperser, dans tout ou partie de la matrice polymère ou dans tout ou partie de la matrice polymère de cette membrane, une charge minérale fonctionnalisée par un groupement fonctionnalisant tels que définis dans la présente invention, comme définie dans les revendications indépendantes.

Toute matrice polymère connue de l'homme du métier est utilisable dans le cadre de la présente invention. Avantageusement, on entend par « matrice polymère » la partie de base d'une membrane, telle qu'une membrane échangeuse d'ions et notamment une membrane échangeuse de protons, cette matrice donnant la forme à la membrane.

Ainsi, toute matrice polymère de base est utilisable dans le cadre de la présente invention. Notamment toute matrice polymère de base habituellement utilisée dans le domaine des piles à combustible et des électrolyseurs est utilisable dans le cadre de la présente invention. En particulier, cette matrice polymère peut être une matrice en un polymère choisi parmi les polyarylènes, les polysulfones, les polyimides, les polybenzimidazoles, les polyuréthanes, les polyoléfines, les polycarbonates, les polyéthylènetéréphtalates, les polyarylèneéthers, ces polymères étant avantageusement fluorés voire perfluorés et/ou sulfonés.

Avantageusement, la matrice polymère peut être choisie parmi les matrices en polymère fluoré et/ou sulfoné tels que le polyfluorure de vinylidène, les copolymères de tétrafluoroéthylène et de tétrafluoropropylène (connus sous l'abréviation « FEP »), les copolymères d'éthylène et de tétrafluoroéthylène (connus sous l'abréviation « ETFE »), les copolymères d'hexafluoropropène et de fluorure de vinylidène (connus sous l'abréviation « HFP-co-VDF »), de fluorure de vinylidène et de trifluoroéthylène (connus sous l'abréviation « VDF-co-TrFE »), de fluorure de vinylidène, de trifluoroéthylène et de monochlorotrifluoroéthylène (connus sous l'abréviation « VDF-co-TrFE-co-chloroTrFE »), les polysulfures de phénylène, les polyarylèneéthers sulfonés et les polymères perfluorés contenant des groupements ioniques fonctionnels sulfoniques ou carboxyliques tels que les polymères Nafion® commercialisés par la société DuPont®.

Les matrices polymères à base de polymères fluorés sont avantageuses, en ce sens qu'elles sont résistantes à la corrosion, présentent de bonnes propriétés mécaniques et une faible perméation aux gaz. Elles sont donc particulièrement adaptées pour constituer des membranes de piles à combustible.

Toutefois, il convient de remarquer que, compte tenu de la grande sensibilité à l'oxydation du (ou des) groupement(s) fonctionnalisant(s) la charge minérale, des matrices polymères habituellement peu ou pas intéressantes pour une application en piles à combustible sont utilisables dans le cadre de la présente invention. De telles matrices sont notamment en polymères de type sPEEK, ces dernières étant connues pour leur très faible durabilité en pile.

La charge minérale mise en oeuvre dans le cadre de la présente invention sert principalement de support au groupement stabilisant la matrice polymère ou la membrane échangeuse d'ions et permet d'éviter son élution dans l'eau générée en continu dans la pile, comme expliqué précédemment. Elle peut, en outre, apporter à la matrice polymère ou à la membrane, telle qu'une membrane échangeuse d'ions d'autres propriétés telles que résistance mécanique ou stabilité thermique. En d'autres termes, la charge minérale constitue (1) un support des groupements stabilisants pour limiter ou supprimer leur élution, (2) un élément renforçant et/ou nanostructurant la membrane et (3) un amplificateur de l'efficacité des groupements stabilisants.

La charge minérale mise en oeuvre dans le cadre de la présente invention se présente sous forme de particules. Ces particules peuvent être de forme sphérique ou parfaitement quelconque, et présenter une distribution de taille monodisperse ou polydisperse. Avantageusement, les particules mises en oeuvre dans la présente invention sont des particules de taille nanométrique : on peut donc parler de « nanoparticules ». Ainsi, ces particules ont des dimensions caractéristiques comprises entre 1 nm et 1000 nm, notamment entre 2 nm et 500 nm et, plus précisément, entre 3 nm et 100 nm. Dans une forme de mise en oeuvre particulière, ces particules ont des dimensions caractéristiques inférieures à 100 nm, notamment lorsque la charge minérale est en silice.

En effet, l'utilisation de (nano)particules permet une bonne dispersion dans la membrane échangeuse de protons et éventuellement une bonne dispersion localisée au niveau de zones définies de la membrane échangeuse de protons telles que la zone hydrophile de cette dernière. En effet, les (nano)particules envisagées dans le cadre de la présente invention peuvent être mises en oeuvre comme les nanoparticules de CeO₂ décrites dans Xiao et al. 2010 **[7].**

La charge minérale mise en oeuvre dans le cadre de la présente invention peut être en métal, en oxyde métallique, en métalloïde, en oxyde de métalloïde, en silicate, en argile ou en un de leurs mélanges. Par « métal » et « oxyde métallique », on entend, dans le cadre de la présente invention, un élément et un oxyde d'un élément choisi dans les groupes 3, 13 et 14 du Tableau Périodique. Avantageusement, la charge minérale mise en oeuvre dans le cadre de la présente invention est en silice (i.e. oxyde de silicium), en montmorillonite, en oxyde de cérium, en titane, en oxyde de titane, en manganèse, en oxyde de manganèse, en zirconium, en oxyde de zirconium, en argent, en or, en fer, en platine ou en un de leurs mélanges.

Dans le cadre de la présente invention, cette charge minérale est fonctionnalisée par un groupement apte à stabiliser chimiquement la matrice polymère et notamment la membrane, telle qu'une membrane échangeuse d'ions. En effet, comme précédemment expliqué, ce groupement a un rôle sacrificiel. En d'autres termes, il s'oxyde plus vite que la matrice polymère et que la matrice polymère de la membrane, telle qu'une membrane échangeuse d'ions et notamment une membrane échangeuse de protons et permet, de fait, que cette dernière soit peu ou pas affectée par les conditions oxydantes, telles que les radicaux libres HO· et HOO· et le peroxyde d'hydrogène, présentes lors du fonctionnement d'une pile à combustible. Par la suite, le groupement fonctionnalisant la charge minérale est appelé « groupement fonctionnalisant ».

De façon avantageuse, la charge minérale mise en oeuvre dans le cadre de la présente invention comprend plusieurs groupements fonctionnalisants identiques ou différents. Par conséquent, dans la présente, l'expression « le groupement fonctionnalisant » est équivalente à l'expression « les groupements fonctionnalisants ».

Le groupement mis en oeuvre dans le cadre de la présente invention fonctionnalise la charge minérale telle que précédemment définie. Cela signifie que ce groupement est lié ou greffé, directement ou indirectement, à cette charge minérale via au moins une liaison covalente.

Cette liaison covalente, lorsqu'elle est directe, implique un atome de la charge minérale et un atome du groupement fonctionnalisant. Au contraire, lorsqu'elle est indirecte, un bras espaceur sépare la charge minérale et le groupement fonctionnalisant et est covalemment lié, d'une part, à la charge minérale et, d'autre part, au groupement fonctionnalisant. Par « bras espaceur », on entend, dans le cadre de la présente invention, un atome ou plusieurs atomes qui n'appartien(nen)t ni à la charge minérale, ni au groupement fonctionnalisant et qui est(sont) une conséquence du procédé et/ou du greffon utilisés pour fonctionnaliser la charge minérale. Le bras espaceur comprend avantageusement un atome de silicium.

En variante, la liaison entre la charge minérale et le groupement fonctionnalisant peut impliquer plus d'une liaison covalente, lorsqu'elle est directe, ou plus de deux liaisons covalentes, lorsqu'elle est indirecte. En variante encore, le groupement fonctionnalisant peut former un groupement pontant entre au moins deux atomes de la charge minérale.

Avantageusement, le groupement fonctionnalisant est un groupement hydrophile ou un groupement soluble dans un solvant hydrophile. Par « groupement soluble dans un solvant hydrophile », on entend, dans le cadre de la présente invention, une fonction chimique avantageusement polaire qui est complètement dissoute à une concentration supérieure ou égale à 5% en poids et à température ambiante dans un solvant hydrophile.

Le groupement fonctionnalisant la charge minérale telle que précédemment définie, et comme définie dans les revendications indépendantes, comprend au moins un atome de soufre. Dans une forme de mise en oeuvre particulière, le groupement fonctionnalisant comprend au moins deux atomes de soufre lorsqu'il porte une fonction acide sulfonique.

De façon avantageuse, le groupement fonctionnalisant comprend de 1 à 40 atomes de carbone, notamment de 2 à 30 atomes de carbone et, en particulier, de 3 à 20 atomes de carbone.

Dans une 1^{ère} forme de mise en oeuvre, le groupement fonctionnalisant comprend un seul atome de soufre et, de préférence, ne présente pas de fonction acide sulfonique. Cet atome de soufre se présente sous forme d'un thiocarbonyle (-C(=S)-).

Dans une 2^{ème} forme de mise en oeuvre, le groupement fonctionnalisant comprend au moins deux atomes de soufre. Ces deux atomes de soufre peuvent se trouver sur la chaîne principale linéaire du groupement fonctionnalisant, sur des chaînes latérales substituant cette chaîne principale ou un sur la chaîne principale et l'autre sur une chaîne latérale la substituant.

Dans cette forme de mise en oeuvre, il est clair que le groupement fonctionnalisant peut comprendre d'autres atomes de soufre que les deux précités. Ainsi, le groupement fonctionnalisant peut comprendre de 1 atome de soufre (1^{ère} forme de mise en oeuvre) à 10 atomes de soufre et notamment 1, 2, 3, 4, 5, 6 ou 7 atomes de soufre.

Dans cette 2^{nde} forme de mise en oeuvre, si ledit groupement comprend au moins un autre atome de soufre, ce ou ces dernier(s) se présente(nt) sous forme de -SH, de-S(=0)2-, de -S(=0)-, de -S((=0)2)0- et/ou de - S((=0)2)OH. A titre d'exemples de cette 2^{nde} forme de mise en oeuvre, un des deux atomes de soufre se présente sous forme de -C(=S)-, et l'autre (ou les autres) atomes de soufre se présentent sous forme de -SH, de -S(=O)₂-, de -S(=O)-, de -S((=O)₂)O⁻ et/ou de -S((=O)₂)OH. Lorsqu'un des deux atomes de soufre se présente sous forme de -C(=S)-, ces derniers interrompent, dans le groupement fonctionnalisant, un groupement (hétéro)alkyle ou un groupement (hétéro)aryle ou séparant un groupement (hétéro)alkylène et un groupement (hétéro)aryle ou un groupement (hétéro)arylène et un groupement (hétéro)alkyle.

En variante de cette 2^{ème} forme de mise en oeuvre, ces deux atomes de soufre sont présents sur la chaîne principale du groupement fonctionnalisant. Ainsi, ce groupement fonctionnalisant répond à la formule (I) suivante :

-X-S-Y-S-Z (I)

dans laquelle
- X représente un groupe alkylène éventuellement substitué, un groupe hétéroalkylène éventuellement substitué, un groupement arylène éventuellement substitué ou un groupe hétéroarylène éventuellement substitué ;
- Y représente une liaison covalente (i.e. une liaison reliant les deux atomes de S de la formule (I)), un groupe disulfure (-S-S- ou pont disulfure), un groupe alkylène éventuellement substitué, un groupe hétéroalkylène éventuellement substitué, un groupement arylène éventuellement substitué ou un groupe hétéroarylène éventuellement substitué ;
- Z représente un groupe alkyle éventuellement substitué, un groupe hétéroalkyle éventuellement substitué, un groupement aryle éventuellement substitué ou un groupe hétéroaryle éventuellement substitué.

Dans le cadre de la présente invention, on entend, par « groupe alkyle » ou « groupe alkylène », un groupe alkyle ou alkylène, linéaire, ramifié ou cyclique, comprenant de 1 à 20 atomes de carbone, notamment de 1 à 15 atomes de carbone et en particulier, de 1 à 10 atomes de carbone.

Dans le cadre de la présente invention, on entend, par « groupe hétéroalkyle » ou « groupe hétéroalkylène », un groupe hétéroalkyle ou hétéroalkylène, linéaire, ramifié ou cyclique, comprenant de 1 à 20 atomes de carbone, notamment de 1 à 15 atomes de carbone et en particulier, de 1 à 10 atomes de carbone, le ou les hétéroatomes pouvant être N, O, P, Si ou S et notamment N, O, Si ou S. Les hétéroatomes peuvent en particulier interrompre une chaîne alkyle ou alkylène, séparer une chaîne alkylène et une chaîne alkyle et/ou séparer deux chaînes alkylène. Dans ces deux derniers cas, les hétéroatomes peuvent se présenter sous forme de radicaux carboxyle ou thiocarbonyle.

Dans le cadre de la présente invention, on entend, par « groupe aryle » ou « groupe arylène », une structure carbonée aromatique constituée d'un ou plusieurs cycles aromatiques comportant chacun de 3 à 10 atomes de carbone et notamment de 3 à 8 atomes de carbone.

Dans le cadre de la présente invention, on entend, par « groupe hétéroaryle » ou « groupe hétéroarylène », une structure carbonée hétéroaromatique constituée d'un ou plusieurs cycles hétéroaromatiques comportant chacun de 3 à 10 atomes de carbone et notamment de 3 à 8 atomes de carbone, le ou les hétéroatomes pouvant être N, O, P, Si ou S et notamment N, O, Si ou S. Les hétéroatomes peuvent en particulier interrompre un cycle aromatique et/ou séparer deux cycles aromatiques d'un groupement aryle ou d'un groupement arylène. Dans ce dernier cas, les hétéroatomes peuvent se présenter sous forme de radicaux carboxyle ou thiocarbonyle.

Dans le cadre de la présente invention, on entend, par « groupe (hétéro)alkyle substitué », « groupe (hétéro)alkylène substitué », « groupe (hétéro)aryle substitué » ou « groupe (hétéro)arylène substitué », un groupe (hétéro)alkyle, un groupe (hétéro)alkylène, un groupe (hétéro)aryle ou un groupe (hétéro)arylène tel que précédemment défini, mono- ou polysubstitué par un groupement choisi parmi un halogène ; une aminé ; une diamine ; un carboxyle ; un carboxylate ; un aldéhyde ; un ester ; un éther ; un hydroxyle ; un halogène ; un (hétéro)aryle éventuellement substitué tel que précédemment défini et notamment tel qu'un phényle, un benzyle ou un naphthyle ; un (hétéro)alkyle éventuellement substitué tel que précédemment défini et notamment tel qu'un méthyle, un éthyle, un propyle ou un hydroxypropyle ; une aminé ; un amide ; un sulfonyle ; un sulfoxyde ; un sulfonate ; un acyle ; un vinyle ; un hydroxyle ; un époxy ; un phosphonate ; un acide sulfonique ; un isocyanate ; un thiol ; un glycidoxy ; un acryloxy et un groupement formule générale -SiRₐR_{b}R_{c} dans laquelle Rₐ, R_{b} et R_{c} sont, indépendamment les uns des autres, choisis dans le groupe constitué par un hydrogène ; un halogène ; une aminé ; une diamine ; un amide ; un acyle ; un vinyle ; un hydroxyle ; un époxy ; un phosphonate ; un acide sulfonique ; un isocyanate ; un carboxyle ; un thiol ; un glycidoxy ; un acryloxy tel qu'un méthacryloxy ; un (hétéro)alkyle éventuellement substitué tel que précédemment défini ; un groupe (hétéro)aryle éventuellement substitué tel que précédemment défini ; un groupe alcoxyle de formule -OR_{d} avec R_{d} représentant un groupe (hétéo)alkyle éventuellement substitué tel que précédemment défini et leurs sels.

C'est notamment grâce à ces substitutions et notamment grâce à une substitution par un groupement de formule générale -SiRₐR_{b}R_{c} que le groupement fonctionnalisant peut devenir pontant. En effet, un groupement de formule générale -SiRₐR_{b}R_{c} avec notamment au moins un parmi Rₐ, R_{b} et R_{c} représentant un groupe alcoxyle de formule -OR_{d} peut être utilisé pour greffer l'extrémité libre du groupement fonctionnalisant sur la charge minérale par un procédé tel qu'une silanisation.

A titre d'exemples plus particuliers, on peut citer un groupement fonctionnalisant répondant à la formule ci-après:

-R₆-N(H)-C(=S)-N(H)-R₇ (V) ;

le radical R₆ représentant un (hétéro)alkylène éventuellement substitué ou un (hétéro)arylène éventuellement substitué tel que précédemment défini et les radicaux R₃, R₅, R₇ et R₉ représentant un (hétéro)alkyle éventuellement substitué ou un (hétéro)aryle éventuellement substitué tel que précédemment défini.

Parmi les groupements fonctionnalisants de formule -R₆-N(H)-C(=S)-N(H)-R₇ (V), on peut citer ceux dans lesquels R₆ représente un (hétéro)alkylène éventuellement substitué tel que précédemment défini, notamment un alkylène éventuellement substitué tel que précédemment défini, en particulier, un méthylène, un éthylène, un propylène ou un butylène et, plus particulièrement, un propylène et dans lesquels R₇ représente un (hétéro)aryle éventuellement substitué tel que précédemment défini, notamment un aryle éventuellement substitué tel que précédemment défini, en particulier, un phényle éventuellement substitué et, plus particulièrement, un phényle éventuellement substitué par un groupe acide sulfonique. Des exemples de tels groupements fonctionnalisants sont de formule -(CH₂)₃-N(H)-C(=S)-N(H)-C₆H₅ ou -(CH₂)₃-N(H)-C(=S)-N(H)-C₆H₄-SO₃H.

Dans le cadre de la présente invention, comme définie dans les revendications indépendantes, il convient de remarquer que les groupements fonctionnalisants sulfonés (i.e. présentant un groupe acide sulfonique) permettent d'améliorer non seulement la durabilité de la membrane et notamment d'une membrane échangeuse de protons mais également ses propriétés de conduction en augmentant la capacité d'échange ionique de cette dernière, qui est fonction du nombre de groupes ioniques par gramme de polymère. D'autres fonctions caractéristiques soit des membranes anioniques telles que des groupes ammonium quaternaire, soit des membranes cationiques telles que des groupes acides peuvent également être utilisées pour substituer le groupement fonctionnalisant et participer de fait aux propriétés de conduction d'une membrane anionique ou d'une membrane cationique.

La présente invention concerne également une membrane, telle qu'une membrane échangeuse d'ions et notamment une membrane échangeuse de protons, comprenant une matrice polymère et au moins une charge minérale fonctionnalisée par au moins un groupement fonctionnalisant tel que précédemment défini. La membrane, telle qu'une membrane échangeuse d'ions et notamment une membrane échangeuse de protons selon la présente invention est donc une membrane composite.

Plus particulièrement, la présente invention concerne une membrane, telle qu'une membrane échangeuse d'ions et notamment une membrane échangeuse de protons, comprenant une matrice polymère, notamment telle que précédemment définie, et au moins une charge minérale, notamment telle que précédemment définie, fonctionnalisée par au moins un groupement comprenant un seul atome de soufre se présentant sous forme d'un thiocarbonyle (-C(=S)-).

En variante, la présente invention concerne une membrane, telle qu'une membrane échangeuse d'ions et notamment une membrane échangeuse de protons, comprenant une matrice polymère, notamment telle que précédemment définie, et au moins une charge minérale, notamment telle que précédemment définie, fonctionnalisée par au moins un groupement comprenant au moins deux atomes de soufre tel que précédemment défini.

La présente invention concerne aussi un procédé de préparation d'une membrane, telle qu'une membrane échangeuse d'ions et notamment une membrane échangeuse de protons selon la présente invention comprenant les étapes consistant à :
a) préparer une charge minérale fonctionnalisée par un groupement comprenant au moins un atome de soufre, tel que défini pour les membranes selon l'invention comme définie dans les revendications indépendantes;
b) combiner la charge minérale fonctionnalisée préparée à l'étape (a) avec une matrice polymère notamment telle que précédemment définie moyennant quoi ladite membrane, telle qu'une membrane échangeuse d'ions ou une membrane échangeuse de protons est obtenue.

Il convient de noter que le procédé pour stabiliser chimiquement une matrice polymère ou une membrane, telle qu'une membrane échangeuse d'ions et/ou pour augmenter sa durabilité selon la présente invention comprend également les étapes (a) et (b) telles que définies ci-dessus. Toutefois, lors de l'étape (a), il n'existe aucune limitation quant aux groupements comprenant au moins un atome de soufre utilisables pour le procédé de stabilisation, contrairement au procédé de préparation d'une membrane dans lequel les groupements comprenant au moins un atome de soufre sont limités aux groupements envisagés pour les membranes selon l'invention.

Différentes variantes sont envisageables pour l'étape (a) du procédé selon l'invention, comme définie dans les revendications indépendantes.

Dans une 1^{ère} variante, cette étape (a) consiste en une fonctionnalisation d'une charge minérale préexistante, cette dernière étant accessible dans le commerce ou pouvant être préalablement préparée. Il peut être nécessaire de soumettre cette charge minérale à un pré-traitement préalablement à cette fonctionnalisation. A titre d'exemple illustratif et non limitatif d'un tel pré-traitement, on peut citer un traitement oxydant. Par « traitement oxydant », on entend, dans le cadre de la présente invention, un pré-traitement visant à oxyder la surface de la charge minérale mise en oeuvre et/ou à préparer cette surface à une future oxydation par formation de radicaux. Une oxydation modifie la surface de la charge minérale notamment en y fixant et/ou en y introduisant des groupements riches en oxygène tels que des groupements de type hydroxyle (-OH) ou silanol (-SiOH).

Dans une 2^{nde} variante, la préparation de la charge minérale et sa fonctionnalisation sont effectuées en une étape unique. Cette variante peut mettre en oeuvre un procédé de type sol-gel utilisant un ou plusieurs composés dérivés de silane, dont au moins un présente un groupement fonctionnalisant tel que défini dans la présente invention. Un tel procédé permet notamment de préparer une particule de silice fonctionnalisée par un groupement fonctionnalisant tel que défini dans la présente invention. Le composé dérivé de silane présentant un groupement fonctionnalisant correspond à un précurseur du groupement fonctionnalisant et à un greffon selon la présente invention.

Quelle que soit la variante envisagée, cette dernière peut mettre en oeuvre un composé dérivé de silane de formule générale SiRₐR_{b}R_{c}Rₑ dans laquelle les radicaux Rₐ, R_{b} et R_{c} sont tels que précédemment définis et le radical Rₑ est un groupement fonctionnalisant selon la présente invention.

Parmi les radicaux Rₐ, R_{b} et R_{c} tels que précédemment définis, on peut citer notamment un (hétéro)alkyle éventuellement substitué tel que précédemment défini ; un groupe (hétéro)aryle éventuellement substitué tel que précédemment défini et un groupe alcoxyle de formule -OR_{d} avec R_{d} représentant un groupe (hétéo)alkyle éventuellement substitué tel que précédemment défini et, en particulier, un groupe alcoxyle de formule -OR_{d}. Les radicaux Rₐ, R_{b} et R_{c} peuvent être identiques ou différents. Avantageusement, les radicaux Rₐ, R_{b} et R_{c} sont identiques. De façon plus avantageuse, les radicaux Rₐ, R_{b} et R_{c} sont des radicaux méthoxy, éthoxy ou propoxy.

Les molécules ci-après constituent des composés dérivés de silane utilisables dans le cadre de la présente invention : 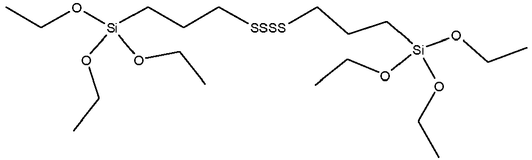 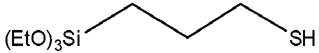 cette dernière étant uniquement utilisable dans le procédé de stabilisation d'une matrice polymère ou d'une membrane,

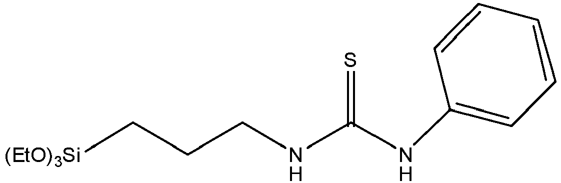

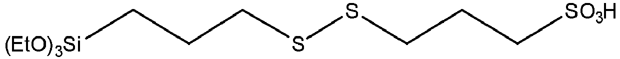

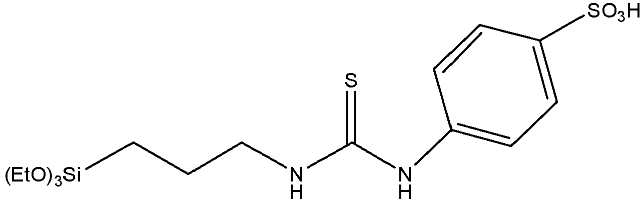

Les procédés de fonctionnalisation par des composés dérivés de silane sont bien connus de l'homme du métier (voir par exemple **[1]** et **[2]**). Ce dernier saura déterminer les conditions opératoires à mettre en oeuvre en fonction de la charge minérale et du greffon employés.

Différentes variantes sont envisageables pour l'étape (b) du procédé selon l'invention.

Dans une 1^{ère} variante, cette étape (b) peut consister à combiner une matrice polymère préexistante, cette dernière étant accessible dans le commerce ou pouvant être préalablement préparée. Dans cette variante, la charge minérale fonctionnalisée est mise en solution dans une solution de gonflement apte à gonfler la matrice polymère. Le choix de cette solution de gonflement se fera en tenant compte de la nature de la matrice polymère et de la nature de la charge minérale fonctionnalisée, notamment de façon à ce qu'elle présente une dispersibibilité relativement stable et homogène dans cette solution de gonflement.

Dans une 2^{nde} variante, cette étape (b) peut consister à combiner la matrice polymère avec la charge minérale au moment où cette matrice polymère est produite ou synthétisée. Dans cette variante, la charge minérale et le (ou les) précurseur (s) de la matrice polymère sont mélangés ensemble.

Une fois l'étape (b) réalisée et ce, quelle que soit la variante envisagée, la charge minérale fonctionnalisée se trouve dispersée ou enrobée dans la matrice polymère.

L'enseignement de Xiao et al., 2010 **[7]** peut également être utilisé pour préparer une membrane échangeuse, telle qu'une membrane échangeuse d'ions ou une membrane de protons dans laquelle les charges minérales fonctionnalisées sont concentrées au niveau de zones prédéterminées de la matrice polymère telles que la zone hydrophile de la membrane échangeuse de protons.

La présente invention concerne également une membrane et notamment une membrane échangeuse de protons telle que définie dans la présente ou susceptible d'être préparée par un procédé tel que défini dans la présente, dans un dispositif de pile à combustible ou dans un électrolyseur.

La présente invention concerne, par conséquent, un dispositif de pile à combustible à membrane échangeuse de protons comprenant au moins une membrane et notamment au moins une membrane échangeuse de protons selon la présente invention ou susceptible d'être préparée par un procédé selon la présente invention.

Avantageusement, le dispositif de pile à combustible selon la présente invention comprend :
- une source de carburant, sous forme liquide ou gazeuse, qui fournit de l'hydrogène à l'anode, cette source de carburant pouvant être de l'hydrogène brut (i.e. présentant des impuretés), de l'hydrogène pur ou purifié, un mélange comprenant de l'hydrogène et au moins un gaz inerte,
- une anode revêtue par un catalyseur au niveau duquel l'hydrogène est oxydé ;
- une source oxydante, sous forme liquide ou gazeuse, qui fournit un oxydant à la cathode, cette source oxydante pouvant être de l'oxygène pur ou purifié, de l'air ou un mélange comprenant de l'oxygène et au moins un gaz inerte ;
- une cathode au niveau de laquelle l'oxydant est réduit et qui est électriquement connectée à l'anode via un conducteur électrique ; et
- un membrane et notamment une membrane échangeuse de protons selon l'invention qui correspond à l'électrolyte servant de conducteur d'ions entre l'anode et la cathode.

Pour préparer un tel dispositif, la membrane selon la présente invention est placée entre deux électrodes, par exemple, en tissu de carbone, éventuellement platiné. L'ensemble est pressé par chauffage. Cet ensemble est ensuite inséré entre deux plaques (par exemple, en graphite, appelées plaques bipolaires, qui assurent la distribution des gaz et la conductivité électrique).

La présente invention concerne également un électrolyseur comprenant au moins une membrane selon la présente invention ou susceptible d'être préparée par un procédé selon la présente invention. Un tel électrolyseur peut être un électrolyseur à membrane ou un électrolyseur à membrane échangeuse de protons tel qu'un électrolyseur de type PEM-WE (pour « Proton Exchange Membrane Water Electrolyzer ») convertissant de l'énergie électrique en énergie chimique.

La membrane selon la présente invention peut également être utilisée en électrodialyse et notamment dans le traitement des effluents industriels ou ménagers.

D'autres caractéristiques et avantages de la présente invention apparaîtront encore à l'homme du métier à la lecture des exemples ci-dessous donnés à titre illustratif et non limitatif.

### EXPOSÉ DÉTAILLÉ DE MODES DE RÉALISATION PARTICULIERS

### I. Greffons utilisés.

Les deux greffons suivants ont été utilisés. Le «greffon B>> corresponde à un greffon selon l'invention, le <<greffon A» sert seulement à un exemple comparatif. :
- Exemple comparatif: un greffon commercial (ci-apès désigné « greffon A ») correspondant au tétrasulfure de Bis[3-(triéthoxysilyl)propyle] (ref. 15200 Aldrich) et de formule : 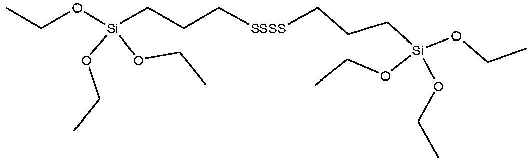
- un greffon synthétisé **[8]** (ci-apès désigné « greffon B ») correspondant au triéthoxysilane substitué par la phényl thiourée et de formule :

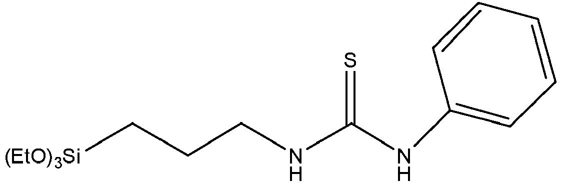

### II. Protocoles de greffage et de mise en oeuvre de la membrane.

Deux cent cinquante µL de greffon A ou 306 mg de greffon B ont été dissous dans 10 ml de N-méthyl-2-pyrrolidone (NMP). A cette solution, a été ajouté 1 ml de solution colloïdale de silice Ludox HS-30 (ref. 420824 Aldrich).

Le mélange a été chauffé à 80°C pendant 24 h, avant d'être purifié par dialyse, permettant ainsi l'élimination du réactif non greffé.

Le polymère par exemple du sPEEK ou du Nafion® en poudre a été dissous dans un solvant approprié. La solution ainsi obtenue a été dispersée dans la solution de silice greffée.

La membrane a été obtenue à partir de la solution contenant le polymère et la silice greffée par coulée évaporation.

### III. Efficacité de la membrane contenant un polymère et de la silice greffée par un dérivé des greffons A ou B, comme stabilisant.

L'efficacité de ces stabilisants a été vérifiée par une mesure précise de la cinétique de dégradation d'une molécule modèle dans une solution de peroxyde d'hydrogène (protocole représentatif d'un vieillissement chimique en pile) en présence ou non du stabilisant.

Les protocoles utilisés sont conformes aux protocoles décrits précédemment pour les conditions oxydantes et pour l'oxydation du composé modèle représentatif.

Une molécule modèle représentative d'une matrice polymère sPEEK (composé M1 tel que précédemment défini) a été retenue pour cette étude, les membranes sPEEK étant connues pour leur très grande sensibilité aux radicaux hydroxyles produits en pile. On observe que la vitesse de dégradation de cette molécule modèle est réduite d'un facteur deux en présence du stabilisant et ce pour les deux greffons précités.

### REFERENCES

[1] Zhao et al., 2010, « MnO2/SiO2-SO3H nanocomposite as hydrogen peroxide scavenger for durability improvement in proton exchange membranes », Journal of Membrane Science, vol.°346, pages 143-151.
[2] Rhee et al., 2006, « Nanocomposite membranes of surface-sulfonated titanate and Nafion® for direct methanol fuel cells », Journal of Power Sources, vol.°159, pages 1015-1024.
[3] Gensler et al., 2000, « Thermo-oxidative degradation of isotactic polypropylene at high temperatures : phenolic antioxidants versus HAS », Polymer Degradation and Stability, vol°67, pages 195-208.
[4] Mikhailenko et al., 2009, « Properties of SPEEK based membranes modified with a free radical scavenger », Journal of Membrane Science, vol.°345, pages 315-322.
[5] De et al., 2008, « Antioxidant activity of an aminothiazole coumpound: Possible mechanisms », Chemico-Biological Interactions, vol.°173, pages 215-223.
[6] Sen et al., 2008, « Anhydrous proton conducting membranes for PEM fuel cells based on Nafion/Azole composites », International Journal of Hydrogen Energy, vol. 33, pages 2808-2815.
[7] Xiao et al., 2010, « Degradation location study of proton exchange membrane at open circuit operation », Journal of Power Sources, vol 195, pages 5305-5311.
[8] Angelova et al., 2004, « Sol-gel synthesis of Zn-thiourea-SiO2 thin films from (EtO)3Si(CH2)3NHC(=S)NHPh as molecular precursor », Solid State Sciences, vol. 6, pages 1287-1294.

## Revendications

1. Utilisation d'au moins une charge minérale se présentant sous forme de particules, fonctionnalisée par au moins un groupement comprenant un groupe thiocarbonyle -C(=S)- à condition que, si ledit groupement comprend au moins un autre atome de soufre, ce ou ces dernier(s) se présente(nt) sous forme de -SH, de -S(=O)₂-, de -S(=O)-, de -S((=O)₂)O⁻ et/ou de-S((=O)₂)OH,
ledit groupement étant lié ou greffé, directement ou indirectement, à ladite charge minérale via au moins une liaison covalente,
pour stabiliser chimiquement une matrice polymère dans une membrane et/ou pour augmenter sa durabilité dans une membrane.

2. Utilisation selon la revendication 1, **caractérisée en ce que** ladite charge minérale est en silice (i.e. oxyde de silicium), en montmorillonite, en oxyde de cérium, en titane, en oxyde de titane, en manganèse, en oxyde de manganèse, en zirconium, en oxyde de zirconium, en argent, en or, en fer, en platine ou en un de leurs mélanges.

3. Utilisation selon la revendication 1 ou 2, **caractérisée en ce que** ledit groupement fonctionnalisant répond à la formule ci-après :
-R₆-N(H)-C(=S)-N(H)-R₇ (V) ;
le radical R₆ représentant un alkylène éventuellement substitué, un hétéroalkylène éventuellement substitué, un groupe arylène éventuellement substitué ou un groupe hétéroarylène éventuellement substitué et le radical R₇ représentant un alkyle éventuellement substitué, un hétéroalkyle éventuellement substitué, un groupe aryle éventuellement substitué ou un groupe hétéroaryle éventuellement substitué.

4. Utilisation selon l'une quelconque des revendications 1 à 3, **caractérisée en ce que** ledit groupement fonctionnalisant est de formule -(CH₂)₃-N(H)-C(=S)-N(H)-C₆H₅ ou -(CH₂)₃-N(H)-C(=S)-N(H)-C₆H₄-SO₃H.

5. Utilisation selon l'une quelconque des revendications précédentes, **caractérisée en ce que** ladite membrane est une membrane échangeuse d'ions et notamment une membrane cationique ou une membrane anionique.

6. Membrane comprenant une matrice polymère et au moins une charge minérale telle que définie à la revendication 1 ou 2, fonctionnalisée par au moins un groupement comprenant un thiocarbonyle (-C(=S)-) à condition que, si ledit groupement comprend au moins un autre atome de soufre, ce ou ces dernier (s) se présente(nt) sous forme de -SH, de -S(=O)₂-, de -S(=O)-, de -S((=O)₂)O⁻ et/ou de -S((=O)₂)OH,
ledit groupement étant lié ou greffé, directement ou indirectement, à ladite charge minérale via au moins une liaison covalente.

7. Procédé de préparation d'une membrane selon la revendication 6 comprenant les étapes consistant à :
a) préparer une charge minérale fonctionnalisée par un groupement tel que défini à la revendication 6 ;
b) combiner la charge minérale fonctionnalisée préparée à l'étape (a) avec une matrice polymère moyennant quoi ladite membrane est obtenue.

8. Procédé selon la revendication 7, **caractérisé en ce que** ladite étape (a) met en oeuvre un composé dérivé de silane de formule générale SiRₐR_{b}R_{c}Rₑ dans laquelle
- les radicaux Rₐ, R_{b} et R_{c} sont, indépendamment les uns des autres, choisis dans le groupe constitué par un hydrogène ; un halogène ; une aminé ; une diamine ; un amide ; un acyle ; un vinyle ; un hydroxyle ; un époxy ; un phosphonate ; un acide sulfonique ; un isocyanate ; un carboxyle ; un thiol ; un glycidoxy ; un acryloxy tel qu'un méthacryloxy ; un alkyle éventuellement substitué ; un hétéroalkyle éventuellement substitué ; un groupe aryle éventuellement substitué ; un groupe hétéroaryle éventuellement substitué ; un groupe alcoxyle de formule -OR_{d} avec R_{d} représentant un groupe alkyle ou un groupe hétéroalkyle éventuellement substitué et leurs sels et
- le radical Rₑ est un groupement fonctionnalisant tel que défini à la revendication 6.

9. Procédé selon la revendication 8, **caractérisé en ce que** le composé dérivé de silane répond à une de ces formules :

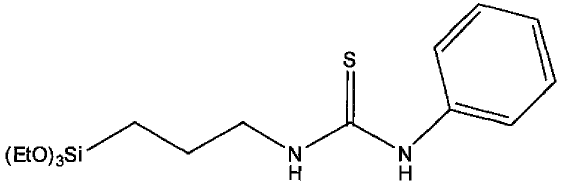

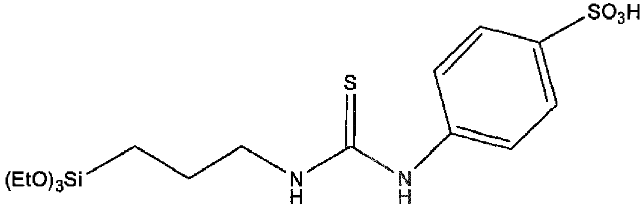

10. Dispositif de pile à combustible comprenant au moins une membrane telle que définie à la revendication 6 ou susceptible d'être préparée par un procédé tel que défini à l'une quelconque des revendications 7 à 9.

11. Electrolyseur comprenant au moins une membrane telle que définie à la revendication 6 ou susceptible d'être préparée par un procédé tel que défini à l'une quelconque des revendications 7 à 9.

## Patentansprüche

1. Verwendung von zumindest einem anorganischen Füllstoff in Form von Teilchen, funktionalisiert mit zumindest einer Gruppe, die eine Thiocarbonylgruppe -C(=S)- enthält, mit der Maßgabe, dass dann, wenn diese Gruppe mindestens ein weiteres Schwefelatom enthält, dieses bzw. diese in Form von -SH, -S(=O)₂-, -S(=O)-, -S((=O)₂)O⁻ und/oder -S((=O)₂)OH vorliegt bzw. vorliegen,
wobei die Gruppe direkt oder indirekt über zumindest eine kovalente Bindung an den mineralischen Füllstoff gebunden oder gepfropft ist,
zur chemischen Stabilisierung einer Polymermatrix in einer Membran und/oder zur Erhöhung ihrer Haltbarkeit in einer Membran.

2. Verwendung nach Anspruch 1, **dadurch gekennzeichnet, dass** der anorganische Füllstoff aus Siliciumdioxid (d. h. Siliciumoxid), Montmorillonit, Ceroxid, Titan, Titanoxid, Mangan, Manganoxid, Zirkonium, Zirkoniumoxid, Silber, Gold, Eisen, Platin oder aus einem ihrer Gemische besteht.

3. Verwendung nach Anspruch 1 oder 2, **dadurch gekennzeichnet, dass** die funktionalisierende Gruppe der nachstehenden Formel entspricht:
-R₆-N(H)-C(=S)-N(H)-R₇ (V);
wobei das Radikal R₆ ein gegebenenfalls substituiertes Alkylen, ein gegebenenfalls substituiertes Heteroalkylen, eine gegebenenfalls substituierte Arylengruppe oder eine gegebenenfalls substituierte Heteroarylengruppe darstellt und das Radikal R₇ ein gegebenenfalls substituiertes Alkyl, ein gegebenenfalls substituiertes Heteroalkyl, eine gegebenenfalls substituierte Arylgruppe oder eine gegebenenfalls substituierte Heteroarylgruppe darstellt.

4. Verwendung nach einem der Ansprüche 1 bis 3, **dadurch gekennzeichnet, dass** die funktionalisierende Gruppe der nachstehenden Formel entspricht: -(CH₂)₃-N(H)-C(=S)-N(H)-C₆H₅ oder -(CH₂)₃-N(H)-C(=S)-N(H)-C₆H₄-SO₃H.

5. Verwendung nach einem der vorangehenden Ansprüche, **dadurch gekennzeichnet, dass** die Membran eine lonenaustauschermembran und insbesondere eine kationische Membran oder eine anionische Membran ist.

6. Membran, enthaltend eine Polymermatrix und zumindest einen anorganischen Füllstoff nach Anspruch 1 oder 2, funktionalisiert mit zumindest einer Gruppe, die eine Thiocarbonylgruppe -C(=S)- enthält, mit der Maßgabe, dass dann, wenn diese Gruppe zumindest ein weiteres Schwefelatom enthält, dieses bzw. diese in Form von -SH, -S(=O)₂-, -S(=O)-, -S((=O)₂)O⁻ und/oder -S((=O)₂)OH vorliegt bzw. vorliegen,
wobei die Gruppe direkt oder indirekt über zumindest eine kovalente Bindung an den mineralischen Füllstoff gebunden oder gepfropft ist.

7. Verfahren zum Herstellen einer Membran nach Anspruch 6, umfassend die nachfolgenden Schritte:
a) Herstellen eines mit einer Gruppe funktionalisierten anorganischen Füllstoffs nach Anspruch 6;
b) Kombinieren des in Schritt (a) hergestellten funktionalisierten anorganischen Füllstoffs mit einer Polymermatrix, wodurch die Membran erhalten wird.

8. Verfahren nach Anspruch 7, **dadurch gekennzeichnet, dass** in Schritt (a) eine Silan-Derivat-Verbindung der allgemeinen Formel SiRₐR_{b}R_{c}Rₑ verwendet wird, worin
- die Radikale Rₐ, R_{b} und R_{c} unabhängig voneinander ausgewählt sind aus der Gruppe bestehend aus Wasserstoff; Halogen; Amin; Diamin; Amid; Acyl; Vinyl; Hydroxyl; Epoxid; Phosphonat; Sulfonsäure; Isocyanat; Carboxyl; Thiol; Glycidoxy; Acryloxy wie Methacryloxy; gegebenenfalls substituiertem Alkyl; gegebenenfalls substituiertem Heteroalkyl; einer gegebenenfalls substituierten Arylgruppe; einer gegebenenfalls substituierten Heteroarylgruppe; einer Alkoxylgruppe der Formel -OR_{d}, wobei R_{d} eine Alkylgruppe oder eine gegebenenfalls substituierte Heteroalkylgruppe darstellt, sowie deren Salzen und
- das Radikal R_{d} ist eine funktionalisierende Gruppe nach Anspruch 6 ist.

9. Verfahren nach Anspruch 8, **dadurch gekennzeichnet, dass** die Silan-Derivat-Verbindung einer dieser Formeln entspricht:

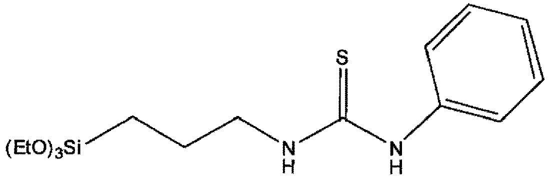

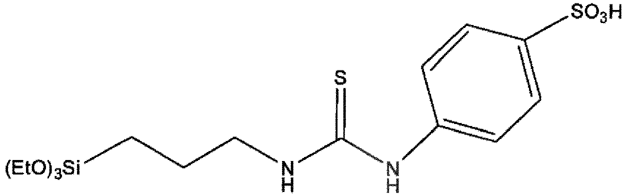

10. Brennstoffzellenvorrichtung, die zumindest eine Membran nach Anspruch 6 enthält oder mit einem Verfahren nach einem der Ansprüche 7 bis 9 hergestellt werden kann.

11. Elektrolyseur, der zumindest eine Membran nach Anspruch 6 enthält oder mit einem Verfahren nach einem der Ansprüche 7 bis 9 hergestellt werden kann.

## Claims

1. Use of at least one mineral filler in the form of particles, functionalized by at least one group comprising a thiocarbonyl function -C(=S)- provided that, if said group comprises at least another sulfur atom, this or these is/are in the form of -SH, -S(=O)₂-, -S(=O)-, -S((=O)₂)O⁻ and/or -S((=O)₂)OH,
said group being bound or grafted, directly or indirectly, to said mineral filler via at least one covalent bond,
for chemically stabilizing of a polymer matrix in a membrane and/or for increasing the durability thereof in a membrane.

2. Use according to claim 1, **characterized in that** said mineral filler is made of silica (i.e. silicon dioxide), montmorillonite, cerium oxide, titanium, titanium oxide, manganese, manganese oxide, zirconium, zirconium oxide, silver, gold, iron, platinum or one of the mixtures thereof.

3. Use according to claim 1 or 2, **characterized in that** said functionalizing group meets the following formula:
-R₆-N(H)-C(=S)-N(H)-R₇ (V);
the radical R₆ representing an optionally substituted alkylene, an optionally substituted heteroalkylene, an optionally substituted arylene or an optionally substituted heteroarylene and the radical R₇ representing an optionally substituted alkyl, an optionally substituted heteroalkyl, optionally substituted aryl or optionally substituted heteroaryl.

4. Use according to any of claims 1 to 3, **characterized in that** said functionalizing group is of formula -(CH₂)₃-N(H)-C(=S)-N(H)-C₆H₅ or -(CH₂)₃-N(H)-C(=S)-N(H)-C₆H₄-SO₃H.

5. Use according to any of the preceding claims, **characterized in that** said polymer matrix is included in a membrane, such as an ion exchange membrane and in particular a cationic membrane or an anionic membrane.

6. Membrane comprising a polymer matrix and at least one mineral filler such as defined in claim 1 or 2, functionalized by at least one group comprising a thiocarbonyl function -C(=S)- provided that, if said group comprises at least another sulfur atom, this or these is/are in the form of -SH, -S(=O)₂-, -S(=O)-, -S((=O)₂)O⁻ and/or -S((=O)₂)OH,
said group being bound or grafted, directly or indirectly, to said mineral filler via at least one covalent bond.

7. Method for preparing a membrane according to claim 6 comprising the steps of:
a) preparing a mineral filler functionalized by a group such as defined in claim 6;
b) combining the functionalized mineral filler prepared at step (a) with a polymer matrix whereby said membrane is obtained.

8. Method according to claim 7, **characterized in that** said step (a) uses a compound derived from silane of general formula SiRₐR_{b}R_{c}Rₑ in which:
- the radicals Rₐ, R_{b} et R_{c}, independently of each other, are chosen from the group consisting of a hydrogen; halogen; amine; diamine; amide; acyl; vinyl; hydroxyl; epoxy; phosphonate; sulfonic acid; isocyanate; carboxyl; thiol; glycidoxy; acryloxy such as a methacryloxy; an optionally substituted alkyl; an optionally substituted heteroalkyl; an optionally substituted aryl group; an optionally substituted heteroaryl group; an alkoxy group of formula -OR_{d} with R_{d} representing an optionally substituted alkyl group or an optionally substituted heteroalkyl group and the salts thereof; and
- the radical Rₑ is a functionalizing group such as defined in claim 6.

9. Method according to claim 8, **characterized in that** the derivative compound of silane meets one of these formulas:

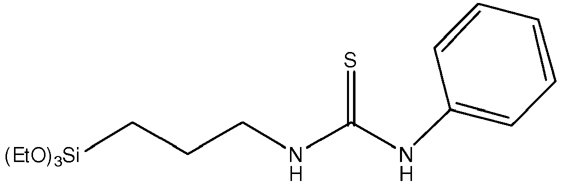

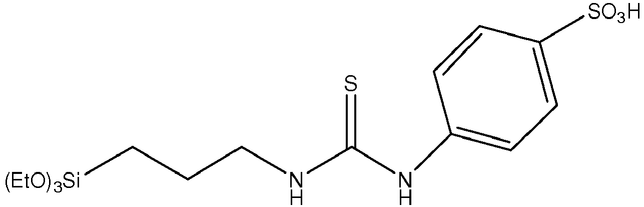

10. Fuel cell device comprising at least one membrane such as defined in claim 6 or able to be prepared using a method such as defined in any of claims 7 to 9.

11. Electrolyzer comprising at least one membrane such as defined in claim 6 or able to be prepared using a method such as defined in any of claims 7 to 9.
